# EUROPÄISCHE PATENTSCHRIFT

(11) **EP 1 134 099 B1**
(45) Veröffentlichungstag und Bekanntmachung des Hinweises auf die Patenterteilung: **04.07.2007**
(21) Anmeldenummer: 01104964.0
(22) Anmeldetag: 01.03.2001
(51) Int. Cl.: B60G 3/26, B60G 7/00, B60T 1/06

(54) **Einzelradaufhängung für ein Kraftfahrzeug**
Independent wheel suspension unit for a motor vehicle
Suspension à roue indépendante pour véhicule automobile

(30) Priorität: 17.03.2000 GB 0006351
(43) Veröffentlichungstag der Anmeldung: 19.09.2001
(73) Patentinhaber: Bayerische Motoren Werke Aktiengesellschaft, 80809 München (DE)
(72) Erfinder: Schmidt, Roland, 82131 Stockdorf (DE)

(56) Entgegenhaltungen:
- DE-A- 2 828 758
- DE-A- 2 924 368
- DE-A- 3 221 320
- FR-A- 2 565 530

## Beschreibung

Die Erfindung betrifft eine Einzelradaufhängung für ein Kraftfahrzeug mit einem ein Fahrzeugrad tragenden Radträger, der in seinem oberen Bereich sowie in seinem unteren Bereich jeweils über ein Montageelement mit Querlenkern verbunden und mit einem Bremssattel-Stützelement versehen ist, über das ein Bremssattel zum Bremsen des Fahrzeugrads abgestützt ist. Insbesondere betrifft die Erfindung eine solche Einzelradaufhängung für lenkbare Fahrzeugräder.

Allgemein bekannt sind Einzelradaufhängungen für lenkbare Fahrzeugräder, bei denen das Rad an einer Achsschenkeleinheit montiert ist, die über zwei voneinander beabstandeten Verbindungsstellen an oberen und unteren sog. Querlenkern schwenkbar so montiert ist, dass diese Achsschenkeleinheit um ihre durch die Verbindungsstellen definierte Lenkachse geschwenkt werden kann, um das Rad zu lenken. Ein mit der Achsschenkeleinheit starr verbundener oder daran quasi integriert ausgebildeter sog. Lenkhebel erstreckt sich vorwärts oder rückwärts und weist an seinem Ende ein Kugelgelenk oder ähnliches zur Verbindung mit einer Spurstange auf. Es ist weiterhin bekannt, den Bremssattel einer Scheibenbremse am Achsschenkel zu montieren.

Bei derartigen Einzelradaufhängungen kann das Problem auftreten, dass bei starkem Bremsen das über den Bremssattel auf die Achsschenkeleinheit einwirkende Drehmoment eine Verdrehung dieser Achsschenkeleinheit um die Rad-Drehachse bewirken kann, wobei diese Verdreh-Bewegung durch die Elastizität in den Befestigungen oder Lagern der Querlenker ermöglicht wird. Diese Verdrehung kann eine beträchtliche Bewegung des freien Endes des Lenkhebels in im allgemeinen vertikaler Richtung bewirken, was wiederum unerwünschte Lenkeffekte hervorrufen kann. Dieses Problem tritt insbesondere dann auf, wenn die Querlenker einer Verdrehung der Achsschenkeleinheit keinen großen Widerstand entgegensetzen können, beispielsweise im Falle von Doppelquerlenkeraufhängungen, bei denen die Querlenker nahe beieinander angeordnet sind.

Eine Einzelradaufhängung nach dem Oberbegriff des Anspruchs 1 ist aus DE-A-2 828 758 bekannt.

Mit der vorliegenden Erfindung soll eine Einzelradaufhängung nach dem Oberbegriff des Anspruchs 1 aufgezeigt werden, mit welcher dieser geschilderten Verdrehbewegung entgegengewirkt werden kann, wobei noch darauf hingewiesen sei, dass diese Verdrehbewegung auch bei nicht gelenkten Einzelradaufhängungen unerwünscht sein kann, da sich auch hier nachteilige Auswirkungen auf die gesamte Achskinematik ergeben können.

Zur Lösung dieser Aufgabe ist vorgesehen, dass das Bremssattel-Stützelement als eine gegenüber dem Radträger um ein gewisses Maß verdrehbare Stützplatte ausgebildet ist, und dass das obere und/oder untere Montageelement gegenüber dem Radträger bewegbar und ferner derart mit der Bremssattel-Stützplatte gekoppelt ist, dass beim Bremsen die Stützplatte durch das Bremsdrehmoment gegenüber dem Radträger verdreht wird und hierdurch eine Bewegung des Montageelements gegenüber dem Radträger bewirkt, welche zur Folge hat, dass der Radträger geringfügig entgegengesetzt zur Drehrichtung des gebremsten Rads verdreht wird. Vorteilhafte Aus- und Weiterbildungen sind Inhalt der Unteransprüche.

Mit der Umsetzung der erfindungsgemäßen Merkmale kann das beim Bremsen am Bremssattel erzeugte Bremsmoment dazu verwendet werden, letztlich den Anbindungspunkt des Radträgers an zumindest einem der Querlenker bzw. die Verbindungsstelle zwischen Radträger und Querlenker derart zu verschieben, dass die durch dieses Bremsmoment hervorgerufene Drehbewegung des Radträgers zumindest teilweise kompensiert, d.h. aufgehoben wird. Bei einer Vorwärtsfahrt des Kraftfahrzeuges bedeutet dies, dass bspw. der obere Radträgerabschnitt gegenüber dem oberen Querlenker in der entsprechenden Verbindung gegen Fahrtrichtung nach hinten verschoben wird, nachdem bei einem Bremsvorgang durch das Bremsmoment der Radträger im Drehsinn des Rades verdreht wird. Eine Verschiebebewegung des oberen Radträgerabschnittes nach hinten wirkt erwünschtermaßen und offensichtlich der genannten Verdrehbewegung durch das Bremsdrehmoment entgegen.

In anderen Worten ausgedrückt wird am Radträger eine gegenüber diesem verdrehbare Stützplatte vorgeschlagen, an der der Bremssattel befestigt ist. Bei Aufbringen eines Bremsmomentes verdreht sich diese Stützplatte gemeinsam mit dem Bremssattel gegenüber dem Radträger. Mit einer geeigneten Hebelübersetzung (integriert in das genannte Montageelement) kann nun diese Bewegung auf den Anbindungspunkt insbesondere des oberen Querlenkers übertragen werden, wonach in diesem die im vorangegangenen Absatz genannte Verschiebebewegung umgesetzt wird.

Anspruch 2 gibt wieder, dass die vorgeschlagene Einzelradaufhängung bei einer an sich bekannten Doppelquerlenkerachse besonders vorteilhaft ist, insbesondere wenn es sich um eine solche mit niedriger Basis, d.h. mit niedrig liegendem oberen Querlenker handelt. Da mit den erfindungsgemäßen Merkmalen nun ein nicht immer zu vernachlässigender bekannter Nachteil einer Doppelquerlenkerachse kompensiert werden kann, kann nun dieses an sich bekannte Achsprinzip auch dann zum Einsatz kommen, wenn dies wegen der geschilderten unerwünschten Verdrehbewegung des Radträgers beim Bremsen, welche gemeinhin auch als "Aufziehen" bezeichnet wird, ansonsten nicht möglich wäre. Somit lassen sich mit der vorliegenden Erfindung die bekannten Vorteile der Doppelquerlenkerachse mit niedriger Basis universeller nutzen. Diese Vorteile liegen insbesondere im relativ geringen Bauraumbedarf und in der niedrigen Bauhöhe, die eine vorteilhafte Linienführung im Frontbereich der Kraftfahrzeug-Karosserie ermöglicht.

Eine relativ einfache Bauweise wird ermöglicht, wenn die Bremssattel-Stützplatte gegenüber dem Radträger um dieselbe Drehachse verdrehbar ist, um die auch das Fahrzeugrad gegenüber dem Radträger dreht. Vorgeschlagen wird weiterhin, auch das genannte Montageelement verdrehbar bzw. verschwenkbar anzuordnen, und zwar am Radträger bezüglich einer Rad-Drehachse parallelen Achse. Bevorzugt ist dann das Montageelement als im wesentlichen L-förmiger Hebel ausgebildet, da dann eine geeignete Hebelübersetzung durch geeignete Längenwahl der Schenkel dieses Montageelementes oder Hebels gewählt bzw. festgelegt werden kann. Ein geeignetes Verbindungsglied kann dann auf einfache Weise die notwendige Koppelung des Montageelementes mit der Bremssattel-Stützplatte herstellen.

Wie erläutert wurde, ist die vorgeschlagene und sogenannte Bremssattel-Stützplatte gegenüber dem Radträger um ein gewisses Maß verdrehbar, und zwar bevorzugt um die Rad-Drehachse. Diese Drehbewegung soll jedoch nur bei einem Bremsvorgang, d.h. bei Einleiten eines Bremsmomentes in die Stützplatte erfolgen. Um zu verhindern, dass sich auch bei ungebremster Fahrt die weiter oben beschriebene über die Bewegung des Montageelementes erzeugte Verschiebebewegung im Anbindungspunkt des Radträgers an zumindest einem der Querlenker bzw. in der Verbindungsstelle zwischen Radträger und Querlenker einstellt, kann die verdrehbare Bremssattel-Stützplatte durch ein geeignet ausgelegtes Federelement in einer definierten und gewünschten Grundstellung gehalten werden.

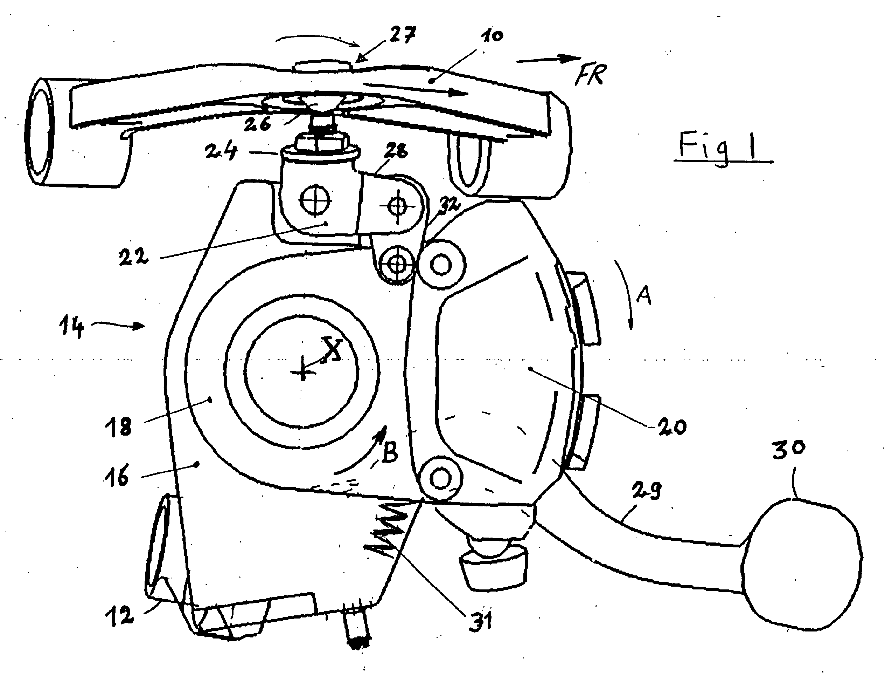

Weitere vorteilhafte Merkmale sind Inhalt der weiteren Unteransprüche. Diese sowie weitere ggf. erfindungswesentliche Merkmale gehen auch aus der folgenden Beschreibung eines bevorzugten Ausführungsbeispieles hervor. Dabei zeigt die beigefügte einzige Figur 1 eine Seitenansicht einer erfindungsgemäßen Einzelradaufhängung des rechten Vorderrades eines Personenkraftwagens, auf die im weiteren Bezug genommen wird.

Eine Einzelradaufhängung für ein lenkbares selbst nicht dargestelltes Fahrzeugrad umfasst einen oberen Querlenker 10 und einen unteren Querlenker 12, die annähernd horizontal und parallel zueinander verlaufend angeordnet und an ihren innenliegenden Enden schwenkbar an der Fahrzeugkarosserie montiert sind. Eine Achsschenkeleinheit 14 ist zwischen den beiden Querlenkern 10, 12 schwenkbar montiert, so dass sie um eine annähernd vertikale Lenkachse gedreht werden kann, um das Fahrzeug zu lenken. Diese Achsschenkeleinheit 14 umfasst einen Radträger 16, an dem das Fahrzeugrad befestigt ist, sowie eine sog. Bremssattel-Stützplatte 18 mit einem daran montierten Bremssattel 20 und ein oberes Montageelement 22.

Der Radträger 16 ist in herkömmlicher Weise an seinem unteren Ende schwenkbar am unteren Querlenker 12 und an seinem oberen Ende mittels des oberen Montageelements 22 schwenkbar am oberen Querlenker 10 montiert. Dieses obere Montageelement 22 ist im wesentlichen L-förmig ausgebildet und besitzt einen ersten Schenkel 24, der sich mit einem Kugelteil 26 eines an seinem oberen Ende montierten Kugelgelenks 27 vertikal nach oben erstreckt, sowie einen zweiten Schenkel 28, der sich horizontal nach vorne, d.h. in Fahrzeug-Fahrtrichtung FR (vgl. Pfeil) erstreckt. Am Mittelwinkel des Montageelements 22, wo die beiden Schenkel 24, 28 aufeinander stoßen, ist das Montageelement 22 schwenkbar um eine Achse, die zur (zur Zeichenebene senkrechten) Drehachse X des Fahrzeugrades parallel ist, mit dem Radträger 16 verbunden.

Das Kugelgelenk 27 verbindet das obere Montageelement 22 mit dem oberen Querlenker 10. Der Radträger 16 ist mittels eines (in der Zeichnung nicht dargestellten) unteren schwenkbaren Gelenks mit dem unteren Querlenker 12 verbunden, und die gesamte Achsschenkeleinheit 14, bestehend aus dem Radträger 16, der Stützplatte 18, dem Bremssattel 20 sowie dem Montageelement 22 kann daher um das obere Kugelgelenk 27 und das entsprechende untere (nicht gezeigte) Gelenk gedreht werden, um das Fahrzeug zu lenken. Hierfür ist ferner ein am Radträger 16 angeordneter Lenkhebel 29 vorgesehen, der sich in Fahrtrichtung FR nach vorne erstreckt und der an seinem vorderen Ende ein Gelenk 30 zur Verbindung mit einer nicht dargestellten Spurstange aufweist. Durch diese erfolgt in üblicher Weise eine Lenkwinkelvorgabe, mit der die Lenkung des Rads gesteuert werden kann. Der Radträger 16 ist dabei so angeordnet, dass er das nicht gezeigte Fahrzeugrad mittels eines Lagers so abstützt, dass sich dieses um die bereits genannte Drehachse X drehen kann, und zwar gemäß Pfeilrichtung A bei Vorwärtsfahrt des Kraftfahrzeuges.

Die sog. Sattelstützplatte 18 ist so am Radträger 16 montiert, dass sie sich gegenüber diesem ebenfalls um die Drehachse X des Rads drehen kann. Sie erstreckt sich auch von dieser Achse X aus in Fahrtrichtung FR nach vorne, und an ihrem vorderen Ende ist der Bremssattel 20 montiert. Ein Federelement 31 ist zwischen dem Radträger 16 und der Sattelstützplatte 18 angeordnet, das bewirkt, dass sich die Sattelstützplatte 18 gegenüber dem Radträger 16 entgegen dem Uhrzeigersinn (und somit gemäß Pfeilrichtung B) drehen möchte, nachdem es sich beim Federelement 31 um eine geeignet dimensionierte Druckfeder handelt. Dabei ist ein figürlich nicht dargestellter Anschlag vorgesehen, der einer durch das Federelement 31 hervorgerufenen Verdrehbewegung entgegenwirkt bzw. diese begrenzt und somit eine sog. Grundposition der Stützplatte 18 in Relation zum Radträger 16 definiert. Aus dieser in Figur 1 dargestellten Grundposition kann sich die Sattelstützplatte 18 gegenüber dem Radträger 16 nur im Uhrzeigersinn (gemäß Pfeilrichtung A) bewegen, und dieser Bewegung wird durch das Federelement 31 entgegengewirkt, d.h. ohne zusätzliche Krafteinleitung wird der Radträger 16 durch das Federelement 31 in der Grundposition gehalten.

Ein Verbindungsglied 32 ist vorgesehen, mit dem das vordere Ende des horizontalen Schenkels 28 des oberen Montageelements 22 mit der Bremssattel-Stützplatte 18 gelenkig verbunden ist. Dieses Verbindungsglied 32 ist im wesentlichen vertikal angeordnet, wobei sein oberes Ende mit dem oberen Montageelement 22 schwenkbar verbunden ist und sein unteres Ende an einem in Fahrtrichtung FR vor der Raddrehachse X liegenden Punkt mit der Stützplatte 18 schwenkbar verbunden ist.

Während des Fahrzeug-Betriebs, d.h. wenn sich das Fahrzeug in Fahrtrichtung FR vorwärts bewegt und der Bremssattel 20 aktiviert wird, um ein Bremsdrehmoment auf das Rad einwirken zu lassen, übt das Rad ein Drehmoment in Richtung des Pfeils A auf die Bremssattel-Stützplatte 18 und damit auch auf die gesamte Achsschenkeleinheit 14 aus. Wenn man zunächst die gesamte Achsschenkeleinheit 14, bestehend aus dem Radträger 16, der Stützplatte 18 und dem oberen Montageelement 22, betrachtet, so besteht hinsichtlich des während des Bremsens auf diese Achsschenkeleinheit 14 einwirkenden Drehmoments die Neigung, diese Achsschenkeleinheit 14 beim Bremsen in Richtung der Drehung des Rads, d.h. gemäß Pfeil A zu verdrehen. Das obere Kugelgelenk 27 wird dabei nach vorne (gemäß Pfeil FR) und die untere Befestigung nach hinten (der Pfeilrichtung FR entgegengerichtet) gedrückt. Durch die Elastizität in den die Querlenker 10, 12 mit der Fahrzeugkarosserie verbindenden, nicht explizit dargestellten Lagerbuchsen kann diese Verdrehung bzw. Bewegung zumindest in einem gewissen Maße erfolgen.

Wenn man nunmehr die Bewegung der einzelnen Teile der Achsschenkeleinheit 14, nämlich den Radträger 16, die Stützplatte 18 und das obere Montageelement 22 im Verhältnis zueinander betrachtet, so besteht durch ein in Pfeilrichtung A wirkendes Bremsdrehmoment die Neigung, die Bremssattel-Stützplatte 18 gegenüber dem Radträger 16 in die Richtung der Drehung des Rads zu drehen, d.h. ebenfalls gemäß Pfeilrichtung A. Das Verbindungsglied 32 wird dadurch nach unten (näher zur Raddrehachse X hin) gezogen, wodurch das obere Montageelement 22 in die gleiche Richtung wie das Rad, d.h. wie aus Figur 1 ersichtlich im Uhrzeigersinn gemäß Pfeil A um die Raddrehachse X gedreht wird. Dadurch wird das obere Kugelgelenk 27 gegenüber dem Radträger 16 in Fahrtrichtung FR nach vorne bewegt oder, andersherum ausgedrückt, es wird das obere Ende des Radträgers 16 gegenüber dem Kugelgelenk 27 gegen Fahrtrichtung FR nach hinten bewegt.

Wie aus dieser Erläuterung hervorgeht, dreht sich somit bei einem Bremsvorgang der Radträger 16 gegenüber den Querlenkern 10, 12 entgegengesetzt zur Rad-Drehrichtung, d.h. gemäß Pfeil B. Das Ausmaß bzw. die Größe dieser Dreh-Bewegung oder auch Verschiebebewegung bei einem gegebenen Bremsdrehmoment hängt von der Federrate des Federelementes 31 und von den Längen der Schenkel 24, 28 des oberen Montageelements 22 ab. Durch geeignete Abstimmung dieser charakterisierenden Größen und des Elastizitätsgrades der Querlenker-Lagerbuchsen ist es daher möglich, das Gesamtsystem so zu gestalten, dass während des Bremsens die Drehung der gesamten Achsschenkeleinheit 14 in die eine Richtung (gemäß Pfeil A) durch eine Verdrehung des Radträgers 16 gegenüber den Querlenkern 10, 12 in die entgegengesetzte Richtung (gemäß Pfeil B) zumindest im wesentlichen kompensiert wird. In Summe wird die Verdrehung des Radträgers 16 daher auf ein Minimum reduziert. Daraus ergeben sich Vorteile für das Fahren und die Fahreigenschaften des Fahrzeugs, und insbesondere wird die vertikale Bewegung des Lenkhebels 29 während des Bremsens, die sonst unerwünschte Auswirkungen auf das Lenken des Fahrzeugs haben würde, dadurch auf ein Minimum reduziert.

Alternativ zu der dargestellten Anordnung wäre es möglich, anstatt einer vorwärts gerichteten Bewegung des oberen Kugelgelenks 27 (bzw. allgemein der oberen Befestigung des Radträgers 16 am oberen Querlenker 10) oder zusätzlich hierzu eine rückwärts gerichtete Bewegung der unteren Befestigung der Achsschenkeleinheit 14 (am unteren Querlenker 12) während eines Bremsvorganges vorzusehen bzw. zu erzeugen. Es gibt jedoch noch einen weiteren Vorteil des Systems gemäß Figur 1, der darin besteht, dass der Radnachlauf dazu neigt, während des Bremsens zuzunehmen, wodurch die Lenkstabilität während des Bremsens erhöht wird. Wenn sich die untere Befestigung rückwärts bewegt, besteht dieser Vorteil nicht. Im übrigen kann die vorliegende Erfindung neben der vorstehend beschriebenen Doppelquerlenkeraufhängung auch für andere Aufhängungsarten verwendet werden, bei denen eine Verdrehung des Radträgers während des Bremsens unerwünscht ist.

## Patentansprüche

1. Einzelradaufhängung für ein Kraftfahrzeug mit einem ein Fahrzeugrad tragenden Radträger (16), der in seinem oberen Bereich sowie in seinem unteren Bereich jeweils über ein Montageelement (22) mit Querlenkern (10, 12) verbunden und mit einem Bremssattel-Stützelement versehen ist -über das ein Bremssattel (20) zum Bremsen des Fahrzeugrads abgestützt ist-,
das als eine gegenüber dem Radträger (16) um ein gewisses Maß verdrehbare Stützplatte (18) ausgebildet ist, **dadurch gekennzeichnet, dass** das obere und/oder untere Montageelement (22) gegenüber dem Radträger (16) bewegbar und ferner derart mit der Bremssattel-Stützplatte (18) gekoppelt ist, dass beim Bremsen die Stützplatte (18) durch das Bremsdrehmoment gegenüber dem Radträger (16) verdreht wird und hierdurch eine Bewegung des Montageelements (22) gegenüber dem Radträger (16) bewirkt, welche zur Folge hat, dass der Radträger (16) geringfügig entgegengesetzt zur Drehrichtung (Pfeil A) des gebremsten Rads verdreht wird.

2. Einzelradaufhängung nach Anspruch 1,
**dadurch gekennzeichnet, dass** der obere Querlenker (10) und der untere Querlenker (12) im wesentlichen zueinander parallel und horizontal verlaufend schwenkbar an der Fahrzeugkarosserie angebunden sind.

3. Einzelradaufhängung nach Anspruch 1 oder 2,
dass die obere und untere Verbindung zwischen dem Radträger (16) und den Querlenkern (10, 12) eine Schwenkbewegung und somit ein Lenken des Rads ermöglicht.

4. Einzelradaufhängung nach einem der vorangegangenen Ansprüche, **dadurch gekennzeichnet, dass** die Bremssattel-Stützplatte (18) gegenüber dem Radträger (16) um die Drehachse (X) des Rads gegenüber dem Radträger (16) verdrehbar ist.

5. Einzelradaufhängung nach einem der vorangegangenen Ansprüche, **dadurch gekennzeichnet, dass** das Montageelement (22) um eine zur Rad-Drehachse (X) parallele Achse verschwenkbar am Radträger (16) montiert und über ein Verbindungsglied (32) mit der Bremssattel-Stützplatte (18) gekoppelt ist.

6. Einzelradaufhängung nach einem der vorangegangenen Ansprüche, **dadurch gekennzeichnet, dass** die verdrehbare Bremssattel-Stützplatte (18) durch ein geeignet ausgelegtes Federelement (31) in einer definierten und gewünschten Grundstellung gehalten wird, wenn kein Bremsmoment eingeleitet wird.

7. Einzelradaufhängung nach einem der vorangegangenen Ansprüche, **dadurch gekennzeichnet, dass** das Montageelement (22) ein Kugelteil (26) eines Kugelgelenks (27) umfasst, mit dessen Hilfe der Radträger (16) am Querlenker (10) montiert ist.

8. Einzelradaufhängung nach einem der vorangegangenen Ansprüche, **dadurch gekennzeichnet, dass** es sich beim besagten gegenüber dem Radträger (16) bewegbaren Montageelement (22) um das obere Montageelement (22) handelt und dass dieses so angeordnet ist, dass es sich gegenüber dem Radträger (16) während des Bremsens in Fahrzeug-Fahrtrichtung (FR) nach vorne bewegt.

## Claims

1. An independent wheel suspension for a motor vehicle comprising a wheel carrier (16), which carries a vehicle wheel and is connected, in its upper region and in its lower region, in each case, to transverse links (10, 12) via an assembly element (22) and is provided with a brake calliper support element, via which a brake calliper (20) is supported to brake the vehicle wheel, and which is configured as a support plate (18) which can be rotated by a certain amount relative to the vehicle wheel carrier (16), **characterised in that** the upper and/or lower assembly element (22) is moveable relative to the wheel carrier (16) and is, furthermore, coupled to the brake calliper support plate (18) in such a way that, on braking, the support plate (18) is rotated relative to the wheel carrier (16) by the braking torque and thus brings about a movement of the assembly element (22) relative to the wheel carrier (16) which results in the wheel carrier (16) being slightly rotated counter to the direction of rotation (arrow A) of the braked wheel.

2. An independent wheel suspension according to claim 1, **characterised in that** the upper transverse link (10) and the lower transverse link (12) are pivotably connected to the vehicle body, running substantially parallel to one another and horizontally.

3. An independent wheel suspension according to claim 1 or 2, **characterised in that** the upper and lower connection between the wheel carrier (16) and the transverse links (10, 12) allows a pivoting movement and therefore a steering of the wheel.

4. An independent wheel suspension according to any one of the preceding claims, **characterised in that** the brake calliper support plate (18) is rotatable relative to the wheel carrier (16) about the rotational axis (X) of the wheel relative to the wheel carrier (16).

5. An independent wheel suspension according to any one of the preceding claims, **characterised in that** the assembly element (22) is mounted on the wheel carrier (16) so as to be pivotable about an axis parallel to the rotational axis (X) of the wheel and is coupled to the brake calliper support plate (18) via a connecting member (32).

6. An independent wheel suspension according to any one of the preceding claims, **characterised in that** the rotatable brake calliper support plate (18) is held in a defined and desired basic position by a suitably designed spring element (31), when no braking torque is introduced.

7. An independent wheel suspension according to any one of the preceding claims, **characterised in that** the assembly element (22) comprises a ball part (26) of a ball and socket joint (27), with the aid of which the wheel carrier (16) is mounted on the transverse link (10).

8. An independent wheel suspension according to any one of the preceding claims, **characterised in that** said assembly element (22) which can be moved relative to the wheel carrier (16) is the upper assembly element (22) and **in that** the latter is arranged in such a way that during braking, it moves forward in the direction of travel (FR) of the vehicle relative to the wheel carrier (16).

## Revendications

1. Suspension de roue indépendante pour un véhicule automobile comportant un support de roue (16) portant une roue de véhicule, et dont la zone supérieure ainsi que la zone inférieure sont reliées à des bras de suspension (10, 12) chacune par l'intermédiaire d'un élément de montage (22), avec un élément d'appui d'un étrier de frein soutenant un étrier de frein (20) pour freiner la roue d'un véhicule, et en forme de plateau d'appui (18) pivotant avec une certaine amplitude par rapport au support de roue (16),
**caractérisé en ce que**
l'élément de montage supérieur et/ou inférieur (22) peut bouger par rapport au support de roue (16) et de plus est couplé au plateau d'appui (18) de l'étrier de frein pour qu'un couple de freinage fasse tourner, lors du freinage, le plateau d'appui (18), par rapport au support de roue (16) et provoquer ainsi un mouvement de l'élément de montage (22) par rapport au support de roue (16), mouvement qui entraîne une très faible rotation du support de roue (16) dans le sens contraire au sens de rotation (flèche A) de la roue freinée.

2. Suspension de roue indépendante selon la revendication 1,
**caractérisée en ce que**
le bras de suspension supérieur (10) et le bras de suspension inférieur (12), essentiellement horizontaux et parallèles, peuvent pivoter sur la carrosserie du véhicule.

3. Suspension de roue indépendante selon la revendication 1 ou la revendication 2,
**caractérisée en ce que**
la liaison supérieure et inférieure entre le support de roue (16) et les bras de suspension (10, 12) permet un mouvement de pivotement et ainsi un braquage de la roue.

4. Suspension de roue indépendante selon l'une quelconque des revendications précédentes,
**caractérisée en ce que**
le plateau d'appui (18) de l'étrier de roue peut tourner autour de l'axe de rotation (X) de la roue par rapport au support de roue (16).

5. Suspension de roue indépendante selon l'une quelconque des revendications précédentes,
**caractérisée en ce que**
l'élément de montage (22) peut pivoter autour d'un axe parallèle à l'axe de rotation (X) de la roue sur le support de roue (16) et est couplé au plateau d'appui (18) de l'étrier de freinage par un organe de liaison (32).

6. Suspension de roue indépendante selon l'une quelconque des revendications précédentes,
**caractérisée en ce que**
le plateau d'appui (18) de l'étrier de roue pivotant est maintenu dans une position de base définie et souhaitée grâce à un élément de ressort (31) conçu en conséquence, lorsqu'aucun couple de freinage n'est initié.

7. Suspension de roue indépendante selon l'une quelconque des revendications précédentes,
**caractérisée en ce que**
l'élément de montage (22) comporte une pièce sphérique (26) d'une rotule (27) qui articule le support de roue (16) sur le bras de suspension (10).

8. Suspension de roue indépendante selon l'une quelconque des revendications précédentes,
**caractérisée en ce que**
l'élément de montage (22) mobile par rapport au support de roue (16) est l'élément de montage supérieur (22) qui peut bouger vers l'avant dans le sens de la marche (FR) du véhicule par rapport au support de roue (16) pendant le freinage.
